Europäisches Patentamt

European Patent Office

Office européen des brevets

(11) Veröffentlichungsnummer : **0 069 370**
**B1**

# (12) EUROPÄISCHE PATENTSCHRIFT

(45) Veröffentlichungstag der Patentschrift :
21.01.87

(51) Int. Cl.⁴ : **B 60 C 11/22, B 60 S 1/68**

(21) Anmeldenummer : **82105946.6**

(22) Anmeldetag : **03.07.82**

(54) Zwischenring für Radsätze mit Doppelbereifung.

(30) Priorität : **07.07.81 CH 4466/81**

(43) Veröffentlichungstag der Anmeldung :
**12.01.83 Patentblatt 83/02**

(45) Bekanntmachung des Hinweises auf die Patenterteilung : **21.01.87 Patentblatt 87/04**

(84) Benannte Vertragsstaaten :
**AT BE DE FR GB IT NL SE**

(56) Entgegenhaltungen :
**DE-A- 1 802 772**
**DE-A- 2 803 134**
**FR-A- 1 257 521**
**US-A- 2 278 070**

(73) Patentinhaber : **ZEPF, Hans-Rudolf**
**Hirsackerstrasse 30**
**CH-8810 Horgen (CH)**

(72) Erfinder : **ZEPF, Hans-Rudolf**
**Hirsackerstrasse 30**
**CH-8810 Horgen (CH)**

(74) Vertreter : **Meyer, Reinhard, Dipl.-Ing.**
**c/o Dr. A. R. Egli & Co. Patentanwälte Horneggstrasse 4**
**CH-8008 Zürich (CH)**

## Beschreibung

Die Erfindung betrifft einen Zwischenring für einen Radsatz mit Doppelbereifung, insbesondere für Fahrzeuge der Bauindustrie, welcher in dem Zwischenraum zwischen den Reifen angeordnet ist und in welchem in den Seitenwänden sich in das Rigmaterial erstreckende, im Mittenbereich der Seitenwände unter Bildung mindestens einer Ringpartie aus massivem Material liegende, in Öffnungen der Seitenwände endende Hohlräume vorgesehen sind.

Bei fahrbaren Baumaschinen ist meistens eine Achse mit Radsätzen mit Doppelbereifung ausgerüstet, einerseits zur Aufnahme der häufig bei solchen Maschinen bewegten grossen Massen und andererseits zur Erhöhung der Geländegängigkeit. Da diese Fahrzeuge vor allem auf dem Baugelände eingesetzt sind, sind die Reifen dieser Räder hoch beansprucht. Hierbei ist es nicht zu vermeiden, dass Fremdkörper, z. B. Steine o. dgl., sich in dem Zwischenraum zwischen den beiden nebeneinanderliegenden Reifen ansammeln. Hierdurch werden die Seitenwände beansprucht und können sogar beschädigt werden, so dass ein vorzeitiger Ersatz des teueren Reifens erforderlich werden kann.

Es ist bekannt (DE-AS-28 22 530), einen Zwischenring in den Zwischenraum der nebeneinanderliegenden Reifen einzubauen, der aus massivem Material, z. B. aus Gummi, hergestellt und weist eine Form auf, die der Seitenbegrenzung des Zwischenraums angenähert entspricht. Damit wird zwar ein guter Verschluss des Zwischenraums erreicht, jedoch sind, da die Form und die Breite des Zwischenraums von der Bauart des Radsatzes und dem verwendeten Reifen abhängig sind, viele Grössen für ein ausreichendes Lager erforderlich. Zudem benötigt der massive Zwischenring verhältnismässig viel Material, was sich in einem entsprechend hohen Preis auswirkt.

Zwar ist ein gattungsgemäßer Zwischenring bekannt (DE-A-28 03 134), bei welchem im Flankenbereich als Wandausnehmungen gebildete Sauglöcher vorgesehen sind, mit welchen sich der Zwischenring an den benachbarten Reifenflanken festsaugen kann. Damit wird einerseits die massive Form des Zwischenringes kaum verändert und andererseits auch keine spürbare Materialersparnis erreicht.

Der Erfindung liegt die Aufgabe zugrunde, einen Zwischenring der eingangs beschriebenen Art so auszugestalten, dass er für mehrere Formen von Zwischenräumen Anwendung finden kann, so dass nur eine kleinere Zahl von Zwischenringen erforderlich ist, um ein marktgerechtes Lager zu schaffen. Weiter soll eine Materialersparnis und damit eine Senkung des Preises erreicht werden.

Diese Aufgabe wird gemäss der Erfindung dadurch gelöst, dass benachbarte und sich gegenüberliegende Oeffnungen der Hohlräume, in der Projektion der Ringachse gesehen, sich überlappen.

Hierbei können die Hohlräume sich abwechselnd von der einen und von der gegenüberliegenden Seitenwand in das Ringmaterial erstrecken und gegebenenfalls eine sich verengende Form, z. B. Kegelform, aufweisen. Die durch die Hohlräume entstehende Stegpartie erleichtert die Anpassung des Zwischenrings an unterschiedliche Zwischenräume.

Die Erfindung ist in der Zeichnung in einem Ausführungsbeispiel dargelegt und nachfolgend beschrieben. Es zeigen :

Figur 1 eine Seitenansicht eines Zwischenrings zum Einbau im Zwischenraum eines Radsatzes mit Doppelbereifung,

Figur 2 einen Schnitt des Zwischenrings nach Fig. 1 längs der Linie II-II und

Figur 3 einen Schnitt des Zwischenrings nach Fig. 1 längs einem Teil der Ringmittellinie III-III in vergrösserter Darstellung.

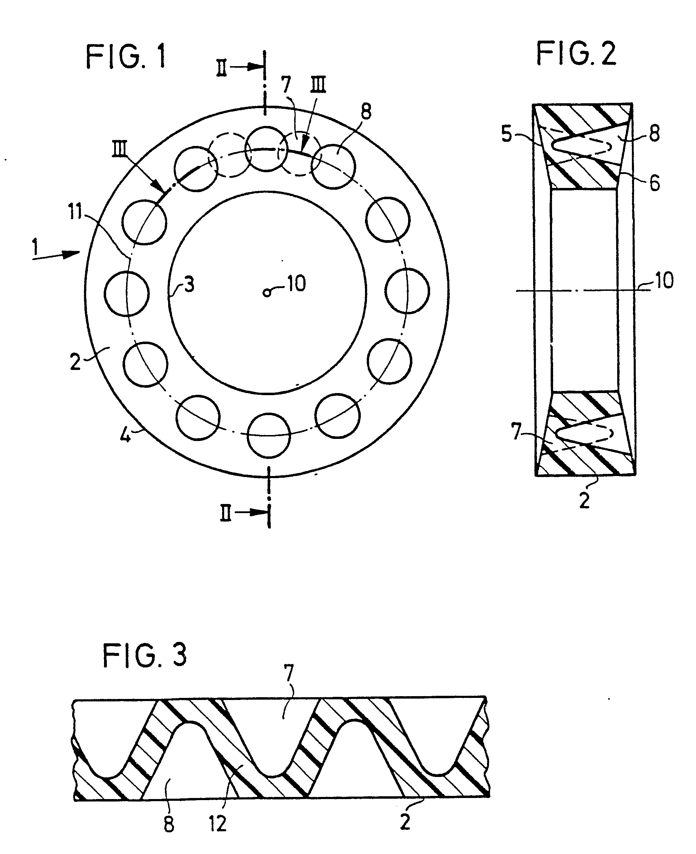

Der in den Fig. 1-3 dargestellte Zwischenring 1 weist einen Ringkörper 2 auf, dessen nabenseitiger Rand 3 einen solchen Durchmesser aufweist, dass der Zwischenring 1 über die Nabenpartie des Radsatzes geschoben werden kann. Der umfangseitige Rand 4 des Zwischenrings 1 weist einen Durchmesser auf, der ausreichend gross ist, um den spaltförmigen Zwischenraum zwischen den Reifen abzudecken.

Wie Fig. 1 und 2 zeigen, sind in den Seitenwänden 5, 6 Hohlräume 7, 8 angeordnet, die sich in das Material des Ringkörpers 2 erstrecken.

In Fig. 2 sind die Seitenwände 5, 6 leicht geneigt, so dass der Querschnitt des Ringkörpers 2 Trapezform aufweist, dessen kleinere parallele Seite gegen die Ringachse gerichtet ist. Die Hohlräume 7, 8 weisen, siehe Fig. 2, Kegelform auf, deren Achse auf dem Mittenkreis 11 des Ringkörpers 2 liegt und parallel zur Ringachse 10 verläuft. Die Hohlräume 7 der Seitenwand 5 sind, siehe Fig. 1, zu den Hohlräumen 8 der Seitenwand 6 versetzt angeordnet. Hierbei ist es möglich, die Hohlräume 7, 8 so anzuordnen, dass ihre Öffnungen in den Seitenwänden 5, 6, in der Projektion der Ringachse 10 gesehen, sich überlappen. Die Anordnung und die Zahl der Hohlräume 7, 8 kann je nach den verlangten Anforderungen gewählt werden, und ebenso kann auch die Form der Hohlräume 7, 8 von der Kegelform abweichen. Werden die Hohlräume 7, 8 in Kegelform ausgeführt, so entsteht im Mittenbereich des Ringkörpers 2 ein zickzackförmiger Steg 12, dessen Wände sich radial erstrecken und gegenüber der Ringachse 10 geneigt sind. Durch diese Ausbildung des Steges 12 entsteht eine Partie des Ringkörpers 2, die in radialer Richtung verhältnismässig steif, in axialer Richtung jedoch verhältnismässig nachgiebig ist. Gerade dies ist erwünscht, damit der Zwischenring 1 sich leicht der jeweiligen Form des Zwischenraums anpassen kann. Trotzdem bildet der Zwischenring 1 einen sauberen Abschluss dieses Zwischenraums, da der Ringkörper 2 im Bereich des Umfangsrandes 4 eine Ringpartie aus massivem Material bildet. Ein ähnlicher Ring kann auch, wie Fig. 1 und 2 zeigen, am nabenseitigen Rand 3 vorgesehen werden.

Der Steg 12 erfüllt auch die Forderung nach einer Verringerung des Materialanteils. Die Hohlräume 7, 8 könnten nur an einer der Seitenwände 5, 6 angeordnet sein, wobei der Hohlraum sich bis auf die andere Seitenwand erstrecken könnte, d. h. durchgehend wäre. In diesem Fall wäre der Steg 12 im Mittenbereich unterbrochen. Es ist möglich, je nach der Grösse des Zwischenrings 1 eine unterschiedliche Form der Hohlräume 7, 8 zu wählen. In jedem Fall kann dadurch der Zwischenring 1 einen sauberen Abschluss an seinem Umfang bilden. Auch ändert er im Betrieb seine Lage nicht, was ebenfalls durch die beschriebene Form der Hohlräume 7, 8 erreicht wird.

**Patentansprüche**

1. Zwischenring für einen Radsatz mit Doppelbereifung, insbesondere für Fahrzeuge der Bauindustrie, welcher in dem Zwischenraum zwischen den Reifen angeordnet ist und in welchem in den Seitenwänden (5, 6) sich in das Ringmaterial erstreckende, im Mittenbereich der Seitenwände unter Bildung mindestens einer Ringpartie aus massivem Material liegende, in Öffnungen der Seitenwände endende Hohlräume (7, 8) vorgesehen sind, dadurch gekennzeichnet, dass benachbarte und gegenüberliegende Oeffnungen der Hohlräume (7, 8), in der Projektion der Ringachse (10) gesehen, sich überlappen.

2. Zwischenring nach Anspruch 1, dadurch gekennzeichnet, dass die Hohlräume (7, 8) sich abwechselnd von der einen und der gegenüberliegenden Seitenwand (5, 6) in das Ringmaterial erstrecken.

3. Zwischenring nach Anspruch 1 oder 2, dadurch gekennzeichnet, dass die Hohlräume (7, 8) eine sich verengende Form, z. B. Kegelform, aufweisen.

4. Zwischenring nach Anspruch 2 oder 3, dadurch gekennzeichnet, dass das Material zwischen den Hohlräumen (7, 8) einen Steg (12) mit radialen, schräg zur Ringachse (10) liegenden Stegwänden bildet.

**Claims**

1. Spacer ring for twin tyres, in particular for construction vehicles, which is arranged in the space between said tyres and in which hollow spaces (7, 8) ending in the openings of the side walls, extend into said walls (5, 6) of the ring material, in the intermediate area of the side walls by forming at least one ring portion of solid material, characterized in that adjacent and opposite openings of the hollow spaces (7, 8) overlap in the projection of the ring axis (10).

2. Spacer ring according to claim 1, characterized in that the hollow spaces (7, 8) alternatingly extend into the ring material from the opposite side walls (5, 6).

3. Spacer ring according to claim 1 or 2, characterized in that the hollow spaces (7, 8) have a narrowing, e. g. conical shape.

4. Spacer ring according to claim 2 or 3, characterized in that the material between the hollow spaces (7, 8) form a web (12) with radial walls, sloping toward the ring axis (10).

**Revendications**

1. Anneau intermédiaire pour un jeu de roues jumelées, notamment pour véhicules de l'industrie du bâtiment, qui est placé dans l'intervalle compris entre les pneus et qui comporte, dans ses parois latérales (5, 6) des cavités (7,8) qui débouchent dans des ouvertures ménagées dans les parois latérales et s'étendent dans la matière constituant l'anneau et qui sont situées dans la zone médiane des parois latérales et forment au moins une partie annulaire en matériau massif caractérisé en ce que les ouvertures voisines et opposées des cavités (7, 8) se recouvrent lorsqu'elles sont vues dans la projection de l'axe (10) de l'anneau.

2. Anneau intermédiaire selon la revendication 1, caractérisé en ce que les cavités (7, 8) partent alternativement de l'une des parois latérales et de la paroi opposée (5, 6) pour pénétrer dans la matière constituant l'anneau.

3. Anneau intermédiaire selon les revendications 1 ou 2, caractérisé en ce que les cavités (7, 8) présentent une forme allant en s'amincissant, par exemple une forme conique.

4. Anneau intermédiaire selon les revendications 2 ou 3, caractérisé en ce que la matière restant entre les cavités (7, 8) forme une âme (12) comportant des parois d'âme radiales obliques par rapport à l'axe (10) de l'anneau.

FIG. 1

FIG. 2

FIG. 3